# EUROPEAN PATENT APPLICATION

(11) **EP 1 835 215 A1**
(43) Date of publication of application: **19.09.2007**
(21) Application number: 07104123.0
(22) Date of filing: 14.03.2007
(51) Int. Cl.: F16L 5/14, H02G 3/22

(54) **Lead-through for water-hoses**

(30) Priority: 17.03.2006 SE 0600603
(71) Applicant: Tollco AB, 741 21 Knivsta (SE)
(72) Inventor: Gerger, Patrik, 194 66 Upplands Väsby (SE)
(74) Representative: Fröderberg, Anders Oskar

(57) **Abstract**

The invention relates to a lead-through effective for leak-proof guidance of waterhoses from a first space into a second space which is separated from the first space through a panel, the lead-through comprising a separable housing (21,22) having a first part (21) which is mountable to the panel face and a second part (22) which is connectable to the first part (21) in sealing contact therewith, the first and second parts complementary shaped so as to form in connected position, for each hose extending through the lead-through, a separate socket (23;24) sealable about the periphery of the hose.

## Description

### TECHNICAL FIELD

The present invention refers to a lead-through for hoses that are arranged to run from water supplying pipes rising in a first space in order to lead water to or from a water consuming appliance arranged in a second space which is separated from said first space through a panel.

### BACKGROUND AND PRIOR ART

A general and costly problem in modern dwellings is water damage caused by leaking hoses and household appliances, such as dish washers, washing machines and tumbler dryers. Conventionally, the appliances are supplied via inflow and outflow pipes rising from the flooring and mouthing inside interior fittings such as kitchen or washroom worktops. The supplying pipes are equipped for connection of hoses that lead water to or from the water consuming appliances. The pipes with connections are typically housed in a space below a kitchen sink or wash basin, while the water consuming appliance is installed in a neighboring space separated from the first space. In conventional building techniques, the pipes rise from the flooring through a slot, i.e. a rear cut-out portion of a bottom panel inside the first space of the interior fittings. The hoses are connected to the pipes below the worktop in an upper portion of the first space, and extend to the appliance via a vertical side panel separating the two spaces, or along the flooring at the rear of the two spaces.

In order to avoid damage from leaking appliances, water-proof plates under the appliances have proven effective for an early detection of water leaks by directing leaking water forwards to be visually observed in front of a dish washer, e.g. In order to avoid damage to the flooring and associated building or interior structures caused by leaking hoses or connections inside the first space there has recently been suggested, in view of meeting regulatory demands for water protection of confined spaces in buildings, that the slot being closed, and the supplying pipes instead rising through the bottom panel while being sealed to the bottom panel about their peripheries, this way capturing leaking water inside a confined space for an early detection.

However, providing the water-hoses a leak-proof guidance through the panel from the first space into the second space is a problem to which solutions still have to be found.

The water-hoses referred to may be pre-connected to the apparatuses in question, and are typically provided with eye nuts or other fittings supported thereabout for connection to the supply pipes. A lead-through for guiding the hose through the panel thus needs to provide a seal about the hose periphery that prevents water from creeping through the panel along the hose exterior, while allowing the hose and fittings to pass through the panel and lead-through, also in the case of an aqua-stop, e.g., being supported on the hose. Obviously, the lead-through also needs to provide a leak-proof attachment to the panel, as well as a structure that avoids ingress of water into the lead-through interior.

The present invention thus aims to provide a lead-through for leak-proof guidance of water-hoses through a panel that separates a first space from a second space, which is effective for preventing leaking water to be transferred via the hose exterior from the first space to the second, or vice versa.

Another object of the present invention is to provide a lead-through for leak-proof guidance of water-hoses which is separable and permits a sealing engagement about the periphery of a hose that is insertable into the lead-through in a lateral motion, i.e. sideways into the lead-through.

Still another object of the present invention is to provide a lead-through for leak-proof guidance of water-hoses through a panel that separates a first space from a second space, and which is structured to be sealingly attached to the panel.

Yet another object of the present invention is to provide a lead-through for leak-proof guidance of water-hoses which is structured to prevent ingress of water into the lead-through interior.

A further object of the present invention is to provide a lead-through for leak-proof guidance of water-hoses wherein measures are included for simple and correct assembly and mounting.

Still a further object of the present invention is to provide a lead-through for leak-proof guidance of water-hoses which is designed for molding in a plastic material, and which is suitable to be molded jointly with elastic sealing members, if appropriate.

### SUMMARY OF THE INVENTION

Some or all of these and other objects are met in a lead-through structured essentially as defined by the accompanying claims, wherein subordinated claims define advantageous embodiments of a lead-through as specified in the main claim.

Briefly, a lead-through effective for leak-proof guidance of at least one water-hose extending from a first space into a second space which is separated from the first space through a panel is disclosed, the lead-through comprising a separable housing having a first part which is mountable to the panel face and a second part which is connectable in sealing contact therewith, the first and second parts complementary shaped so as to form, in connected position, for each hose extending through the lead-through, a separate socket sealable about the periphery of the hose.

In a preferred embodiment, the first and second housing parts are interconnectable and both mountable onto the panel face. In another embodiment, the housing is formed in its bottom for insertion into the panel, and having a flange which sits sealingly onto the panel face in mounted position.

As preferred, the first and second housing parts are complementary shaped to form, in connected position, a joint having a covered drainage channel that opens in the channel end. The illustrated example of an embodiment discloses a drainage channel defined between parallel ribs projecting from one housing part along the joint, and a cover flange which is formed on the other housing part to be seated on the ribs in connected position.

Each hose socket is advantageously defined through a semi-circular socket formed on one housing part and a semi-circular socket formed on the other housing part.

A leak-proof seal between the housing and a hose periphery is provided from a ring-shaped sealing element insertable in the socket to sit sealingly on the outer rim of the socket, while clamping about the hose that is running through a central hole formed in the sealing element. The sealing element is advantageously split longitudinally through a locking projection formed on the sealing element exterior, mating in inserted position with a corresponding longitudinal recess formed on the interior of the socket. The sealing element may be realized as a cylinder sleeve, in one end formed with a ring-shaped cap having a beveled or a cambered front facing away from the sleeve.

Advantageously, the sealing element may be composed of two materials of different elastic properties, the ring-shaped cap being made of a softer material than is the sleeve, such as a thermoplastic elastomer. The cylinder sleeve and ring-shaped cap may be jointly molded into a composite sealing element.

The first and second parts of the housing are formed with countersunk collars for mounting screws by which the housing is mountable to the panel, each collar preferably communicating with a drainage channel sloping towards the exterior of the housing. Also, each countersunk collar is formed at the bottom of a through hole, an entrance of which may be surrounded by a ring-shaped rib projecting from the topside of the housing exterior.

Advantageously, the first and second housing parts are formed with seats for screws and nuts by which the housing parts are mutually connectable, said seats being shaped to receive a screw for rotation in the seat as well as formed to receive, alternatively, a nut non-rotationally in the seat. Also, the first and second housing parts are associated with a sealing member running along the bottom rim of the housing. The housing may be composed of two materials of different elastic properties, the sealing member being made of a softer material than is the housing, such as a thermoplastic elastomer. If appropriate, the housing and sealing member are jointly molded into a composite lead-through housing.

### SHORT DESCRIPTION OF THE DRAWINGS

The invention is more closely explained below, with reference made to the drawings illustrating an embodiment of the new lead-through for water-hoses. In the drawings,
Fig. 1 shows in a rear view an interior fitting and typical installation and lay-out of hoses according to conventional installation techniques;
Fig. 2 is a view similar to fig. 1 showing a leak-proof first space and a second space separated there from;
Fig. 3 is a perspective view showing the lead-through according to the present invention as assembled;
Fig. 4 shows the lead-through of fig. 3 in a top-view;
Fig. 5 is a perspective view showing the interior of a first housing part included in the lead-through;
Fig. 6 is a corresponding perspective view showing the interior of a second housing part included in the lead-through;
Fig. 7 is a view from below of the assembled housing;
Fig. 8a and 8b are sectioned longitudinal and bottom views, respectively, showing a sealing element cooperating with the lead-through and sectioned through a longitudinal slit and locking formation, and
Fig. 9 is a perspective view showing a second embodiment.

### DETAILED DESCRIPTION OF THE INVENTION

A first embodiment of the lead-through according to the invention is described below in relation to a typical domestic application, however, the invention is not restricted thereto and may be used also in other applications where water-hoses need to find a leak-proof guidance through a side panel, a bottom panel, a wall panel, a floor panel, etc.

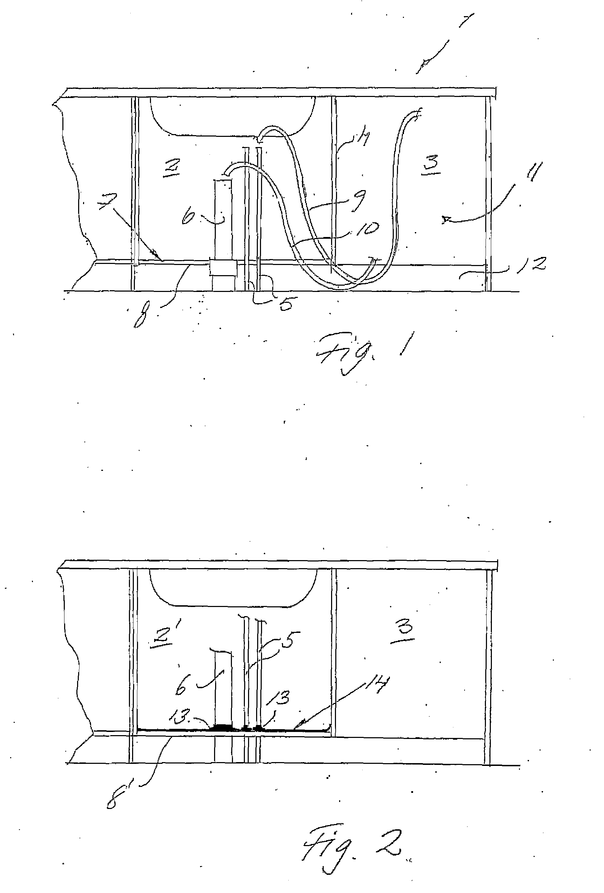

With reference to fig. 1, an interior fitting here realized as a kitchen work-top 1 is viewed from the rear, comprising a first space 2 and a second space 3 separated from the first space through a vertical side panel 4. In the first space, water in-flow pipes 5 and water out-flow pipes 6 rise from the flooring through a slot 7 formed as a cut-out portion at the rear end of a bottom panel 8 to the first space 2, Hoses 9 and 10 connect to the water in-flow and out-flow pipes, respectively, for leading water to and from a water consuming appliance 11, such as a dish washer, located in the second space 3. Typically, in conventional installation techniques, the hoses are running between the first and second spaces along the flooring, at the rear of the interior fitting and in a vertical space provided from a socket 12 supporting the interior fitting.

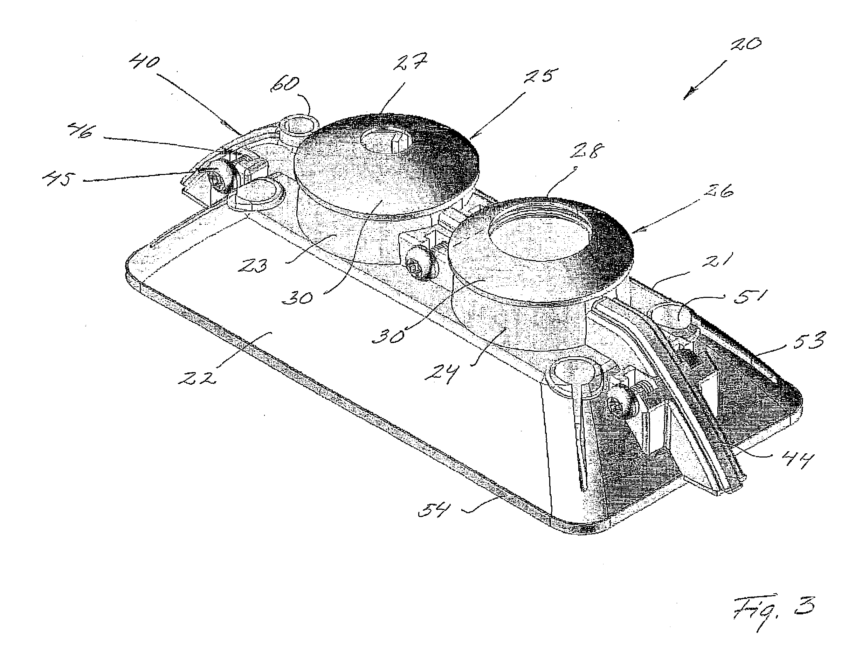

An interior fitting similar to fig. 1 is illustrated in fig. 2, differing however with respect to the first space 2'. According to newer building techniques, the first space 2' is made leak-proof by closing the slot 7, the water supplying pipes 5 and 6 rising through openings formed in the bottom panel 8' and sealed about their peripheries at 13. Advantageously, the bottom panel has a leak-proof top coating or sheet insert 14 against which the in-flow and out-flow pipes are sealed, this way effectively preventing damages caused by leakage water that otherwise may reach the flooring, as well as associated building or interior structures, from the water-protected space 2'.

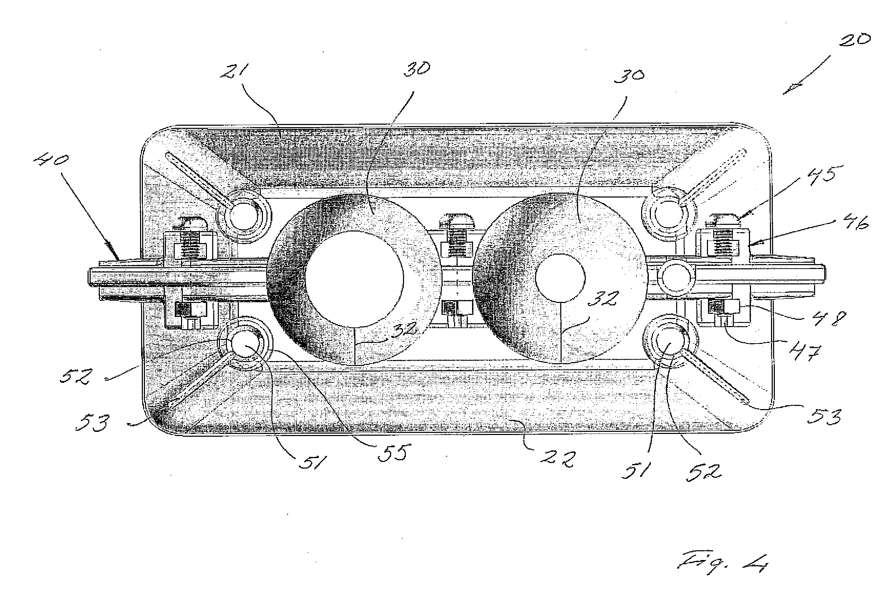

With reference to figs. 3-7, the lead-through of the present invention comprises a housing 20 which is separable and including, at least, a first housing part 21 and a second housing part 22. The first and second housing parts are complementary shaped so as to form, in connected position, a separate socket 23, 24 for each hose to be guided there through (hoses not illustrated in the drawings). In a preferred embodiment, as disclosed, each socket is defined through a semi-circular socket half formed on one housing part and a semi-circular socket half formed on the other housing part.

The structure permits the hoses to be received sideways in a radial/lateral motion with respect to the length extension of the hoses, before the first and second housing parts are mutually connected. Upon installation, the first housing part may be mounted to the panel face over through holes for hoses extending through the panel, whereupon the second housing part is connected to the first housing part in sealing engagement therewith, and under completion of the sockets surrounding the hoses. The panel face referred to may be of any inclination, but would generally be of a vertical position, such as the panel 4 of fig. 1, or a horizontal position such as the panels 8, 8' of figs. 1 and 2, respectively. Installation is also accomplishable by firstly completing the housing around the hose/hoses, extended through the panel together with appropriate fittings, and successively mounting the interconnected housing parts onto the panel face. Mounted to the panel, the lead-through thus covering an opening which is oversized with respect to the hose diameters, is likewise operative to prevent the passage there through of pest animals and insects.

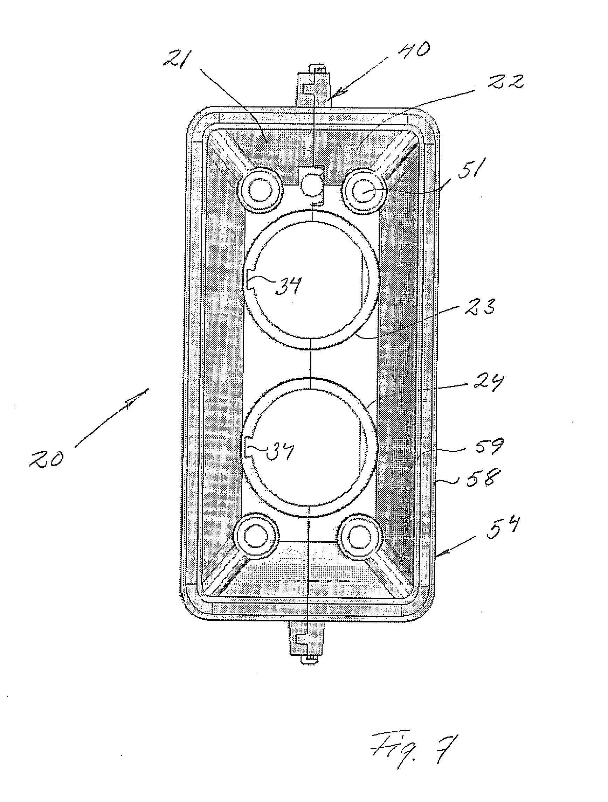

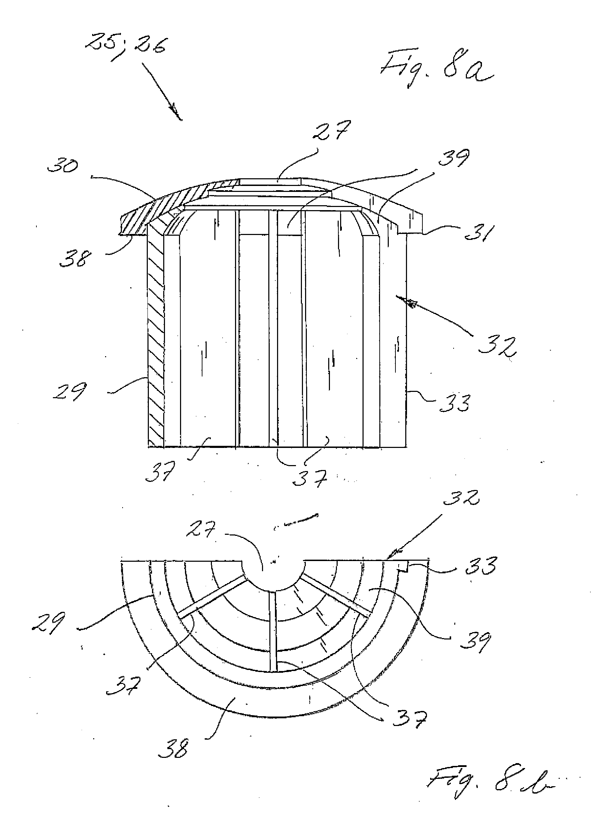

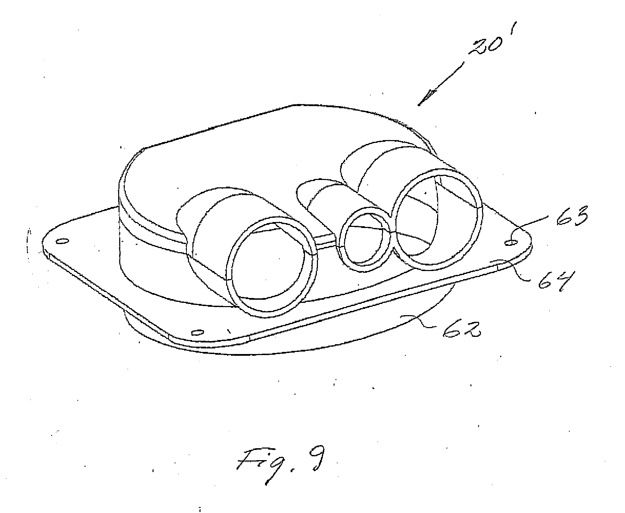

A leak-proof seal between the housing 20 and the periphery of a hose extending through a socket 23 or 24 is secured through a cylindrical sealing element 25, 26, shown separately in figs. 8a and 8b. The sealing element is insertable in the socket and arranged to sit sealingly on the outer circular rim of the socket 23, 24 when the housing parts are mutually connected. A hole 27, 28 is formed through the sealing element, the hole having a diameter adapted to the outer diameter of a hose running through the hole, the sealing element thus effective for sealing about the hose periphery as the hose and sealing element are inserted in the socket 23, 24. The sealing element is an elastic or resilient element shaped from a cylinder sleeve 29, carrying in a top end a ring-shaped cap 30. The cap 30 advantageously has a cambered or beveled front rising from the cap periphery towards the hole, and facing away from the housing as the sealing element is inserted into the socket. The cap 30 may also have, as shown in the illustrated embodiment, a radius that reaches radially outside the outer periphery of the socket, forming as desired an edge 31 from where water flowing over the cap front may be controlled to drip onto the housing exterior in case of leakage water creeping along the hose exterior. The sealing element has a longitudinal slit 32 through the wall of the cylinder sleeve 29 and continued through the cap 30. The slit may advantageously mouth through an elevated formation in the cap front, such as a radial rib arranged in the front face of the cap 30 and effective to prevent water on the cap front from entering the slit. In effect of the slit 32 and elastic properties of the sealing element, the sealing element is openable so as to be slipped onto the hose from one side thereof to sit about the periphery of the hose. The sealing element this way supported on the hose may be inserted together with the hose into a semi-circular socket half before the housing parts are mutually connected, or may alternatively be inserted longitudinally together with the hose in a socket of the assembled housing.

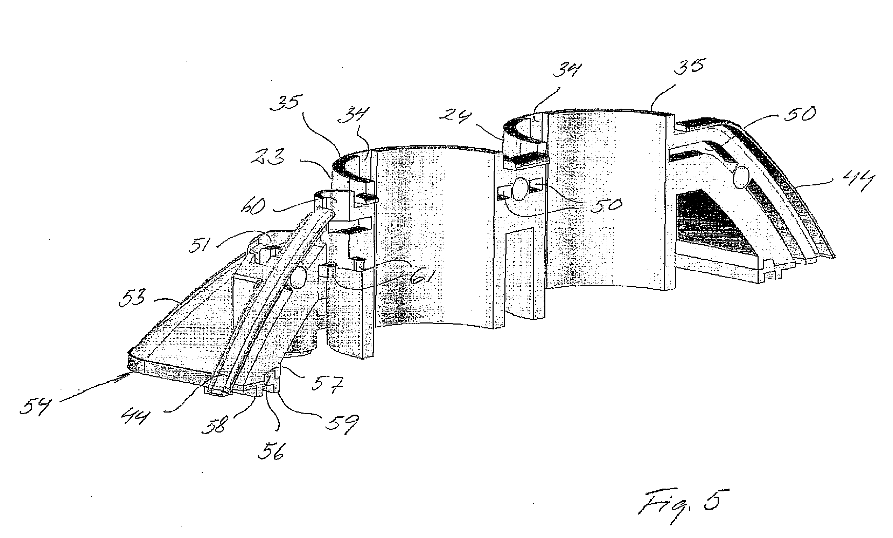

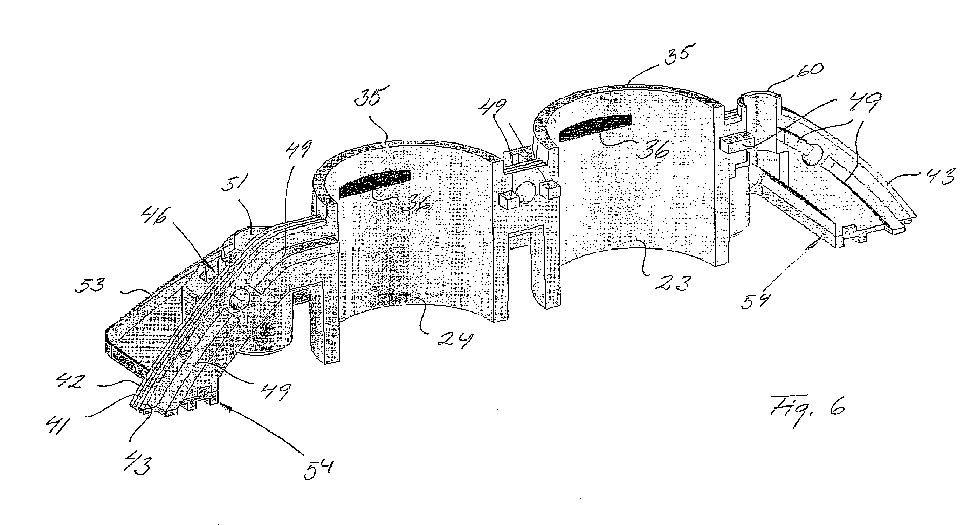

In a preferred embodiment, the slit 32 runs through a radial projection running longitudinally on the exterior of the cylinder sleeve 29 of the sealing element 25, 25. The radial projection, advantageously in the shape of a dovetailed rib 33, mates in locking engagement with a corresponding recess 34 formed on the interior of the sockets 23, 24, and best visible in figs. 5 and 7 of the drawings. The rib 33 and recess 34 may be shaped so as to be snapped together upon insertion in a radial direction, however it is preferred to provide a shape in the locking formations 33, 34 that permits the sealing element to be slipped in the longitudinal direction until the cap 30 is seated with the lower side thereof abutting the outer rim 35 of the socket. Upon assembly the locking formations 33, 34 when mated effect a closure of the slit sealing element about the hose, this way arresting the hose and sealing element in the semi-circular socket until the socket is completed through connection of the housing halves. The pipe-sockets 23, 24 may additionally comprise means for axially arresting the sealing element 25, 26 in the pipe-socket. Such arresting means may include one or several restricting formations 36 protruding radially inwards from the socket wall, as illustrated in fig. 6.

In the case of a hose diameter that is less than the inner diameter of the cylinder sleeve 29, the radial difference may be compensated for through ribs 37, illustrated in figs. 8a and 8b, and reaching from the inner periphery of the cylinder sleeve 29 to abut and support the exterior of a hose extending there through. Also visible in figs. 8a and 8b, the cap 30 may be seated concentrically about the top end of the cylinder sleeve 29 through a circular rim 38. The cylinder sleeve 29 may be formed as illustrated to adjoin the lower side of the cap 30 through a radial collar 39 reaching inwards so as to give support to the cap from below. Advantageously, the cap 30 may have a gradually or stepwise decreasing sectional width as seen from the periphery towards the hole, in order to control the resiliency and sealing effect. The sectional width in that portion of the cap which defines the hole, such as the hole 28 of fig. 3, is preferably dimensioned to allow this portion of the cap to be received between the circular ribs that are conventionally found on the exterior of an outer hose which surrounds a water-bearing, inner hose, where appropriate,

In the sealing element, at least the cap 30 is made from a material that is effective to provide a tight and sealing contact about the hose periphery, such as a synthetic or polymer material, a co-polymer material, specifically a thermoplastic elastomer material, or even nature material such as rubber and rubber mixtures. Advantageously, a thermoplastic elastomer cap 30 may be jointly molded with a polymer cylinder sleeve 29 into an integrated structure.

Returning now to the housing 20 shown in figs. 3-7, the housing parts 21, 22 are formed to be mutually connected through a joint 40 wherein measures are provided that prevent ingress of water into the lead-through interior. These measures may include, for example, a sealing member (not shown) that is incorporated in the joint. Specifically, a drainage channel 41 is provided through ribs 42, 43 projecting from the exterior of one housing part and arranged to run in parallel along the joint area, as is visible in fig. 6. The drainage channel 41 is defined between the ribs and a flange 44 that is formed on the other housing part, visible in fig. 5, said flange reaching over the parallel ribs so as to be seated in contact with the rib tops as the housing is assembled. The drainage channel 41 runs sloping through the joint 40 above the housing exterior to mouth in a lower end, at which the channel is drained from water that eventually penetrates into the channel between the flange 44 and the outer rib 42. The seated contact between the flange 44 and the outermost rib 42 causes water that eventually finds its way into the drainage channel to be distributed longitudinally.

In the illustrated embodiment, assembly of the housing parts 21, 22 is accomplished through bolt and nut connections 45, see fig. 4. To this purpose, seats 46 for bolts and nuts are arranged at the joint area. Advantageously, the seats 46 may be arranged as illustrated to receive, alternatively, a bolt in rotary accommodation 47 or a nut in non-rotational accommodation 48. Through the illustrated structure of seats 46, assembly is possible from opposite directions with respect to the extension of joint and housing. Mating lugs 49 and grooves 50 may additionally be arranged in meeting surfaces of the joint area to ensure a correct fit and assembly of the housing parts 21, 22. Alternatively or additionally to the bolt and nut connections 45, other fastening means may be utilized for assembly, such as clamps or suitable adhesives.

The housing is mountable to the panel through mounting screws (not shown in the drawings), receivable in through holes 51 to bear with their heads against countersunk collars 52 arranged at a bottom region of the through holes, upon penetration of the mounting screws into the panel. Each through hole for a mounting screw is drained from water through a drainage channel 53, sloping from the countersunk collar 52 to open in the housing exterior. In the embodiment disclosed, mounting screws are seated in connection to each corner of the housing, however, additional mounting screws may be similarly arranged at other positions, such as on the longer sides of the housing, if appropriate. A ring-shaped rib 55 projecting from the top of the housing exterior may be provided to encircle the through hole 51, further preventing water from entering the mounting holes 51.

As preferred, both housing parts 21, 22 are arranged with seats for mounting towards the panel, however, in alternative embodiments it may be appropriate to arrange for mounting a first housing part towards the panel while the mating housing part is secured sealingly towards the panel upon connection to the first housing part.

A leak-proof mounting of the housing onto the panel, or onto a leak-proof coating or insert that covers the panel face, may be accomplished through a sealing member 54 interposed between the panel and a bottom rim of the housing, see figs. 5 and 6. In the embodiment disclosed, a sealing member 54 is attached to the bottom rim of each housing part 21, 22, and secured therein through a lip 56 engaging a corresponding groove 57 formed in the bottom rim surface. Facing the panel in mounted position, a couple of ribs 58, 59 may be arranged to run in parallel along the bottom line of the housing, the ribs providing dual barriers towards water trying to penetrate into the housing from the exterior. The sealing member 54 is advantageously made from a material that is effective to provide a tight and sealing contact with the panel face, such as a synthetic or polymer material, a co-polymer material, specifically a thermoplastic elastomer material, or even a nature material such as rubber and rubber mixtures. Advantageously, a thermoplastic elastomer sealing member 54 may be jointly molded with a polymer housing into an integrated structure.

If appropriate, such as in a case of irregularities in the panel face, an additional sealing strip or an adhesive may be applied to the sealing member, preferably in association with the rib formations in the lower side of the sealing member 54.

In addition to the sockets 23, 24 effective for leak-proof guidance of water-hoses through the panel, a lead-through may also be operative for guidance of an electric wire that supplies power to the apparatus in question. To this purpose, a socket 60 may be arranged as illustrated or at any suitable location for leading through an electric wire that extends further through the panel into the second space where the apparatus is installed. An arresting means 61, in the shown embodiment shaped as a couple of fingers visible in fig. 5, operates like a snap locking means for arresting the wire in the socket 60 upon assembly of the housing parts. The arresting means 61 may be formed integrally on one of the housing parts, or realized as a separate element attachable to a housing part.

Another embodiment of a lead-through for leak-proof guidance of water-houses through a panel is shown schematically in fig. 9. The embodiment of fig. 9 differs from the first embodiment inter alia with respect to its mounting onto the panel. More specifically, in this second embodiment the housing 21', 22' is formed in its bottom area to be inserted into the panel. A collar portion 62 depending from the housing bottom is insertable through a corresponding hole formed through the panel, while seats 63 for mounting screws are arranged in a flange 64 that sits sealingly onto the panel area which encircles the hole.

Apprehensible from the drawings, the lead-through may be shaped to provide an over-all water-rejecting exterior such as the generally convex shape of the illustrated first embodiment. Though shown mainly in the shape of a four-sided rectangular body having sloping side faces, the invention is likewise useful in other designs having other geometrical outlines, such as square, oval, elliptical or circular, and with sloping planar or curved sides. It will also be understood from the description that specified features applied in combination result in a most preferred embodiment, while applied separately each feature, or possible combination of features, still will result in different useful embodiments under the scope of invention as defined in the main claim.

## Claims

1. A lead-through effective for leak-proof guidance of at least one water-hose extending from a first space into a second space which is separated from the first space through a panel, the lead-through **characterized by**
- a separable housing (21, 22) having a first housing part which is mountable to the panel face and a second part which is connectable to the first part in sealing contact therewith, the first and second parts complementary shaped so as to form in connected position, for each hose extending through the lead-through, a separate socket (23; 24) sealable about the periphery of the hose.

2. The lead-through of claim 1, wherein the first and second housing parts are mutually connectable and each mountable onto the panel face.

3. The lead-through of claim 1, wherein the first and second housing parts (21, 22) are complementary shaped to form, in connected position, a joint (40) having a drainage channel (41) that opens in the channel end.

4. The lead-through of claim 3, wherein the drainage channel is defined between parallel ribs (42, 43) projecting from one housing part along the joint, and a covering flange (44) which is formed on the other housing part to be seated on the ribs in connected position.

5. The lead-through of claim 1, wherein each socket (23; 24) is defined through a semi-circular socket half formed on one housing part and a semi-circular socket half formed on the other housing part.

6. The lead-through of claim 5, wherein a leak-proof seal between the housing and a hose periphery is provided from a cylindrical sealing element (25; 26) insertable in the socket (23; 24) to sit sealingly on the outer rim (35) of the socket, while clamping about a hose that is extending through a central hole (27; 28) formed in the sealing element.

7. The lead-through of claim 6, wherein the sealing element is split (32) longitudinally through a locking formation (33) arranged on the exterior of the sealing element (25; 26), mating in inserted position with a corresponding longitudinal recess (34) formed on the interior of the socket (23; 24).

8. The lead-through of claim 6, wherein the sealing element (25; 26) is a cylinder sleeve (29) in one end formed with a ring-shaped cap (30) having a beveled or a cambered front facing away from the sleeve.

9. The lead-through of claims 6-8, wherein the sealing element (25; 26) is composed of two materials of different elastic properties, the cap (30) being made of a softer material than is the cylinder sleeve (29), such as a thermoplastic elastomer.

10. The lead-through of claim 9, wherein the cylinder sleeve (29) and cap (30) are jointly molded into a composite sealing element.

11. The lead-through of any previous claim, wherein at least one of the first and second parts of the housing (20) are formed with countersunk collars (52) for mounting screws by which the housing is mountable to the panel, each collar communicating with an open drainage channel (53) sloping towards the exterior of the housing.

12. The lead-through of claim 11, wherein each countersunk collar (52) is formed at the bottom of a through hole (51), an entrance of which is surrounded by a ring-shaped rib (55) projecting from the topside of the housing exterior.

13. The lead-through of any previous claim, wherein the first and second housing parts are formed with seats (46) for screws and nuts by which the housing parts are mutually connectable, said seats being shaped to receive a screw for rotation (47) in the seat as well as formed to receive, alternatively, a nut, non-rotationally (48) in the seat.

14. The lead-through of any previous claim, wherein the first and second housing parts are associated with a sealing member (54) carried about the bottom rim of the housing.

15. The lead-through of claim 14, wherein the housing (20) is composed of two materials of different elastic properties, the sealing member (54) being made of a softer material than is the housing parts (21, 22), such as a thermoplastic elastomer.

16. The lead-through of claim 15, wherein the housing and sealing member are jointly molded into a composite lead-through housing.

17. The lead-through of claim 1, wherein the housing (21, 22) is formed in its bottom area for insertion into the panel, and having a flange (63) which sits sealingly onto the panel face in mounted position.
